# EUROPÄISCHE PATENTSCHRIFT

(11) **EP 1 913 478 B1**
(45) Veröffentlichungstag und Bekanntmachung des Hinweises auf die Patenterteilung: **10.10.2018**
(21) Anmeldenummer: 06792656.8
(22) Anmeldetag: 02.08.2006
(51) Int. Cl.: G06F 11/10, G06F 11/16

(54) **MIKROPROZESSORSYSTEM ZUR STEUERUNG BZW. REGELUNG VON ZUMINDEST ZUM TEIL SICHERHEITSKRITISCHEN PROZESSEN**
MICROPROCESSOR SYSTEM FOR CONTROLLING AND/OR REGULATING AT LEAST PARTLY SECURITY-CRITICAL PROCESSES
SYSTEME DE MICROPROCESSEUR POUR COMMANDER OU REGLER DES PROCESSUS RELEVANT AU MOINS EN PARTIE DE LA SECURITE

(30) Priorität: 11.08.2005 DE 102005038306; 02.08.2006 DE 102006036386
(43) Veröffentlichungstag der Anmeldung: 23.04.2008
(73) Patentinhaber: Continental Teves AG & Co. OHG, 60488 Frankfurt am Main (DE)
(72) Erfinder: FEY, Wolfgang, 65527 Niedernhausen (DE); KIRSCHBAUM, Andreas, 64287 Darmstadt (DE); TRASKOV, Adrian, 61449 Steinbach (DE)
(86) Internationale Anmeldenummer: PCT/EP2006/064977
(87) Internationale Veröffentlichungsnummer: WO 2007/017445

(56) Entgegenhaltungen:
- DE-A1- 4 341 082
- DE-A1- 19 529 434
- US-A- 5 915 082

## Beschreibung

Die Erfindung betrifft ein Mikroprozessorsystem gemäß Anspruch 1 und dessen Verwendung in Kraftfahrzeugsteuergeräten.
Aus der DE 195 29 434 A1 (P 7959) geht ein Mikroprozessorsystem für sicherheitskritische Anwendungen hervor. In diesem Mikroprozessorsystem sind aus Gründen der Redundanz zwei gleichartige Mikroprozessorkerne (Kernredundanz) vorgesehen, welche taktsynchron und parallel das gleiche Programm abarbeiten. Die den Mikroprozessorsystemen zugeordneten Bussysteme sind ebenfalls zweifach vorhanden, jedoch ist der Speicher aus Kostengründen nicht vollsymmetrisch aufgebaut. Es hat sich gezeigt, dass eine hohe Fehlererkennungsrate erreicht werden kann, wenn an einem der beiden Bussysteme lediglich Prüfdaten in einem Prüfdatenspeicher mit geringerem Speicherumfang gespeichert werden, welche den vollständigen Daten im vollständigen Speicher eindeutig zugeordnet sind. Damit beiden Kernen jeweils alle Daten redundant zur Verfügung stehen, wird ständig ein Vergleich der vollständigen Daten mit den Prüfdaten unter Verwendung von Hardware-Generatoren durchgeführt. Die Hardware-Generatoren können entweder Prüfdaten erzeugen oder die Prüfdaten zum Vergleich mit Hilfe der vollständigen Daten vervollständigen (Datenfehlerkorrektur). Ein Mikroprozessorsystem gemäß dem Oberbegriff von Anspruch 1 ist aus der DE 43 41 082 A1 bekannt. Die vorliegende Erfindung setzt sich zum Ziel, eine alternatives zweikerniges Mikroprozessorsystem anzugeben, welches ebenfalls einen vollständigen Speicher und einen Prüfdatenspeicher mit geringerer Größe zur Speicherung von Redundanzinformationen umfasst, welche den im vollständigen Speicher gespeicherten Originaldaten zugeordnet sind, und wobei das Mikroprozessorsystem gegenüber entsprechenden zweikernigen Mikroprozessorsystem eine erhöhte Fehlererkennungsrate aufweist.

Diese Aufgabe wird erfindungsgemäß gelöst durch das Mikroprozessorsystem gemäß Anspruch 1.

Das Mikroprozessorsystem gemäß der Erfindung umfasst zwei in einem Chipgehäuse integrierte Zentralrecheneinheiten.

Jeder Recheneinheit ist ein eigenes Bussystem (erster und zweiter Bus) zugeordnet, so dass dieses ebenfalls redundant ausgeführt ist.

Weiterhin umfasst das Mikroprozessorsystem einen Prüfdatenspeicher am ersten Bus, welcher gegenüber dem vollständigen Speicher am ersten Bussystem einen reduzierten Speicherumfang hat. In dem Prüfdatenspeicher sind die Prüfdaten, die mit Daten des Speichers am ersten Bussystem zusammenhängen, gespeichert.

Im Prüfdatenspeicher werden Prüfdaten gespeichert, die mit Daten des vollständigen Speichers zusammenhängen. Das Speichern der Prüfdaten dient zur Erkennung von typischen Datenspeicherfehlern, welche bei Schreib- oder Leseoperationen in seltenen Fällen vorkommen können. Die Erkennung solcher Fehler kann auch dadurch erfolgen, dass der vollständige Speicher doppelt vorhanden ist und die Daten zweimal in identischer Form gespeichert werden. Dies ist jedoch kostenintensiv, da der Speicher einen beträchtlichen Teil der Herstellungskosten eines Chips einnimmt. Es hat sich gezeigt, dass entsprechend dem Mikroprozessorsystem nach der vorliegenden Erfindung eine ausreichende Fehlererkennung auch mit einem im Speicherplatzbedarf reduzierten Redundanzspeicher, dem Prüfdatenspeicher vorgenommen werden kann. Hierzu wird beispielsweise zu einem Datenwort (Datum) im vollständigen Speicher eine Prüfinformation oder ein Prüfwert (z.B. Paritätsinformation, Hamming-Code oder dergleichen) im Prüfdatenspeicher gespeichert. Im einfachsten Fall kann das ein Paritätsbit der Breite 1 Bit sein. Komplexere Codierungsverfahren, z.B. Hamming-Codes können auch eine Fehlerkorrektur ermöglichen sowie mehrfache Fehler erkennen. Die Paritätsinformation kann wortweise und/oder aus mehreren Datenworten des vollständigen Speichers zusammengefasst (blockweise Prüfdatenkodierung) gebildet sein.

Bevorzugt ist nur ein Teil des vollständigen Speichers durch einen Prüfdatenspeicher abgesichert. In diesem Fall gibt es folglich Speicherbereiche im vollständigen Speicher, die nicht gegen Fehler abgesichert sind. Diese Speicherbereiche können mit weniger wichtigen Programmfunktionen gefüllt werden, welche nicht sicherheitskritisch sind. Es ist aber auch möglich, dass der gesamte vollständige Speicher durch den Prüfdatenspeicher abgesichert ist.

Die Bussysteme umfassen außerdem Vergleichs- und/oder Treiberkomponenten, welche den Datenaustausch und/oder Vergleich von Daten zwischen den beiden Bussystemen ermöglichen.

Zumindest am zweiten Bussystem ist ein an sich bekannter Hardware-Prüfdatengenerator angeordnet, welcher beispielsweise durch logische Gatter realisiert ist. Die für die Erkennung von Speicherfehlern notwendigen Prüfinformationen werden demzufolge nicht von einer Zentralrecheneinheit (CPU) erzeugt, sondern durch einen sogenannten, physikalisch von der CPU getrennt angeordneten Hardware-Prüfdatengenerator. Ein Hardware-Prüfdatengenerator ist vorzugsweise eine im wesentlichen festverdrahtete Halbleiterstruktur, welche nach einer vorgegebenen Logik bestimmte Arbeitsschritte zur Datenverarbeitung und/oder Signalverarbeitung selbstständig ohne Hilfe einer Zentralrecheneinheit durchführt. Die vom Hardware-Generator durchgeführten Operationen könnten zwar im Prinzip auch von der Zentralrecheneinheit durchgeführt werden, jedoch ist dies - neben einer möglichen erhöhten Fehlerrate - in der Regel mit einem höheren Taktzyklenverbrauch verbunden, wodurch die Laufzeit stark erhöht werden würde.

Der Prüfdatenspeicher weist bevorzugt einen unahbängigen zusätzlichen Adressdekoder auf, der insbesondere von der Recheneinheit am zweiten Bus angesteuert wird. Am zweiten Bussystem ist besonders bevorzugt weder ein Prüfdatenspeicher, noch ein Speicher angeordnet, welcher zur Absicherung von Daten des Speichers am ersten Bus eingesetzt wird.

Bei dem vollständigen Speicher handelt es sich bevorzugt um einen Schreib-/Lesespeicher. Es ist aber auch möglich, dass ein Nur-Lesespeicher (z.B. ROM, Otp-ROM, EPROM, EEPROM oder Flash-ROM) nach dem erfindungsgemäßen Prinzip abgesichert wird.

Das aus der DE 195 29 434 A1 bekannte Verfahren der Absicherung mit einem Prüfdatenspeicher erfüllt zwar die für heutige Anwendungen erforderlichen Anforderungen an Verfügbarkeit, jedoch existieren außer den erwähnten Speicherfehlern auch zusätzliche Fehlerarten, welche sich durch die bekannte Architektur nicht absichern lassen. So lassen sich zum Beispiel Fehler auf dem Adress-Bus und Fehler des AdressDekoders nicht erkennen. Zwar würde eine blockweise Prüfdatenkodierung zur Erzeugung von Prüfinformationen die Erkennung dieser zusätzlichen Fehlerarten zulassen, jedoch wäre dieses Verfahren auf die Anwendung eines Festwertspeichers beschränkt. Daher wird gemäß der Erfindung zumindest ein Teil des vollwertigen Speichers mittels eines ebenfalls am Bus des Speichers angeordneten Prüfdatenspeichers und entsprechenden Prüfdaten abgesichert. Hierdurch wird eine Erkennung der vorstehend erwähnten zusätzlichen Fehlerarten erreicht.

Vorzugsweise ist im Mikroprozessorsystem nach der Erfindung eine Einrichtung zur Adressfehlererkennung implementiert. Diese ist insbesondere so ausgestaltet, dass Mittel vorgesehen sind, welche die Adresse der abzusichernden Daten bei der Berechnung der Prüfdaten einbeziehen. Ganz besonders bevorzugt werden beim Schreiben insbesondere die Prüfdaten, welche z.B. Prüfbits sind, nicht nur an Hand der Datenbits berechnet, sondern an Hand der abzusichernden Daten und der zugehörigen Adresse. Auf diese Weise können Adressierungsfehler beim Lesen der Daten erkannt werden. Die Adressfelererkennung ist vorzugsweise an jedem der beiden Bussysteme vorhanden.

Ein alternativ bevorzugtes Mittel zur Adressfehlererkennung besteht in einer zusätzlich im Mikroprozessorsystem implementierten Einrichtung, die im Hintergrund einen oder mehrere Tests zur Adressfehlererkennung durchführt. Diese Art der Fehlererkennung wird zweckmäßigwerweise nicht parallel während Schreib-/Lesezugriffen durchgeführt. Diese Fehlererkennungsmaßnahme wird vielmehr insbesondere nur im Rahmen einer periodischen gesonderten Prüfung durchgeführt, bei der bevorzugt keine weiteren wesentlichen CPU-Aktivitäten vorliegen. Die hier beschriebene alternative Adressfehlererkennung kann als Software oder als Hardware-Maßnahme ausgeführt sein. Die hier beschriebenen Mittel können insbesondere innerhalb der CPU oder innerhalb der Hardware State Maschine als nach Art eines eingebauten Selbsttests ausgeführt werden.

Gemäß dem Selbsttest wird bevorzugt der Speicher mit einem vordefinierten Muster (Pattern) beschrieben und anschließend ausgelesen. Das Muster kann besonders bevorzugt so ausgelegt sein, dass mögliche Decodierungsfehler oder Ansteurungsfehler absichtlich zu einer Verfälschung der Daten führen. Beim Auslesen wird dieser absichtlich herbeigeführte Fehler dann erkannt.

Zusätzlich oder alternativ zu den beiden vorstehend erwähnten Fehlererkennungseinrichtung ist bevorzugt ein Adressierungsfehlererkennungsmittel implementiert, bei dem in eine Speicherzelle die Adresse der Speicherzelle geschrieben und danach überprüft wird.

Ein Beispiel für die zuvor beschriebene Methode ist der sogenannte "Address-to-Data" Test. Gemäß diesem Test wird jede Speicherstelle mit dmn Zahlenwert der Adresse der Speicherstelle beschrieben:

| Adresse | Datum |
|---|---|
| 0x00 | 0x00 |
| 0x01 | 0x01 |
| ... | |
| 0xff | 0xff |

Bei einem Fehler wird dann eine Zahl nicht zurückgelesen, eine andere dafür doppelt.

Der Prüfdatenspeicher, der gemäß der Erfindung eingesetzt wird, ist im Prinzip ein herkömmlicher Schreib-/Lesespeicher, jedoch mit einem gegenüber dem vollständen Speicher reduzierten Speicherumfang.

Die Mikroprozessorsysteme sind in einem gemeinsamen Chipgehäuse integriert und werden bevorzugt taktsynchron betrieben. Bevorzugt sind beide Systeme auf einem gemeinsamen Halbleitermaterial angeordnet.

Das Mikroprozessorsystem umfasst zwei Bussysteme, welche bevorzugt jeweils aus einem Datenbus, Adressbus und Kontrollbus bestehen.

Neben dem oder den Schreib-/Lesespeichern ist zum Betrieb des Mikroprozessorsystems natürlich auch zumindest ein Festwertspeicher vorhanden. Unter dem Begriff Festwertspeicher wird gemäß der Erfindung ein zumindest für eine gewisse Zeit nicht flüchtiger Speicher, wie insbesondere vom Typ ROM, Flash-ROM oder OTP-ROM verstanden. Entsprechend dem Prinzip der Kernredundanz ist es dabei nicht unbedingt nötig, dass an beiden Bussystemen vollständige bzw. inhaltlich identische Festwertwertspeicher vorhanden sind. Wenn das Redundanzkonzept, was bevorzugt ist, auch auf den Festwertspeicher übertragen wird, dann ist vorgesehen, dass durch entsprechende Prüfinformationen sichergestellt ist, dass die Daten des Festwertspeichers abgesichert sind. Dies kann insbesondere durch einen kleineren Festwertspeicher am zweiten Bus erreicht werden, welcher an Stelle der Daten geeignete Prüfinformation enthält.

Bevorzugt werden in dem Mikroprozessorsystem nach der Erfindung Prüfdaten zusätzlich am ersten Bus im physikalischen Speicher oder zumindest in unmittelbarer Nähe des vollwertigen Schreib-/Lesespeichers gespeichert. In unmittelbarer Nähe bedeutet, dass die entsprechenden Chipstrukturen aneinander angrenzen, so dass die notwendige geringe Laufzeit der Daten eingehalten werden kann.

Das Mikroprozessorsystem ist bevorzugt so aufgebaut, dass bei einem Lesezyklus die Daten des vollständigen Speichers mit diesen Daten zugeordneten Prüfdaten durch eine oder mehrere Hardware-Prüfeinheiten verglichen werden, welche insbesondere im oder in der Nähe des Daten-Speicherbereichs positioniert ist/sind. Die Hardware-Korrektureinheit(en) korrigieren die Daten im Falle eines Fehlers mit Hilfe der Prüfdaten. Durch diese Korrektur lassen sich beispielsweise Einfachfehler, wie z.B. ein falsches Bit, ohne weiteres korrigieren, so dass das Mikroprozessorsystem nicht abgeschaltet werden muss. Je nach Komplexität des Prüfwortes können so auch kompliziertere Fehler abgefangen werden. Ist eine Korrektur nicht erfolgreich, dass heißt, war der Fehler in den Daten so komplex, dass durch Verknüpfung mit den Prüfinformationen die korrigierten Daten immer noch fehlerhaft sind, so werden diese durch eine bevorzugt vorhandene weitere Vergleichseinheit, die die auf den parallelen Bussystemen anstehenden Daten vergleicht, entdeckt. Als Folge davon wird zweckmäßigerweise ein Fehlersignal auf einer geeigneten Fehlerleitung ausgegeben, welche insbesondere das Mikroprozessorsystem stilllegt oder von der weiteren Elektronik abkoppelt. Hierdurch wird beispielsweise in einem elektronischen Bremssystem wirksam verhindert, dass irrtümlich die Ventiltreiber angesteuert werden.
Eine Erkennung von Adressfehlern ist nach der Erfindung durch die unabhängige Adressierung des Prüfdatenspeichers wegen des über der Recheneinheit am zweiten Bus angesteuerten zusätzlichen Adressdekoders möglich. Ein Prüfdatenspeicher am zweiten Bus kann auf diese Weise vorteilhafterweise entfallen. Hierdurch ergibt sich außerdem noch eine vereinfachte Ausführung der Fehlererkennungseinrichtung am zweiten Bus, welcher insbesondere keine Fehlergenerierungsschaltkreise enthält.

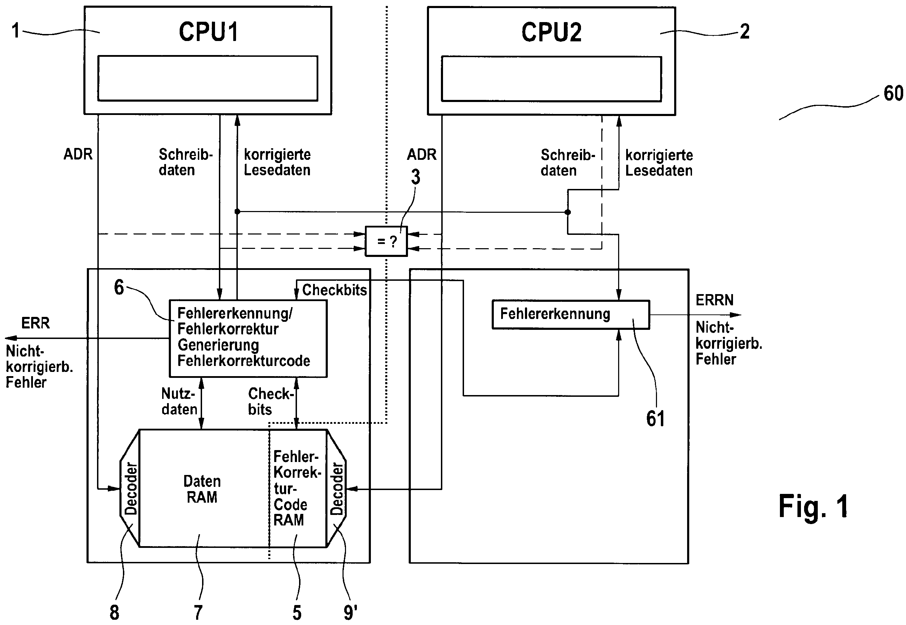

Im Gegensatz zu bekannten fehlerkorrigierenden/fehlererkennenden Mikroprozessoren, die das Prinzip der Kernredundanz nutzen, und in denen lediglich Mechanismen zur Erkennung/Korrektur von Fehlern in einer Speicherzelle vorhanden waren, ist es gemäß der Erfindung nun möglich, den gesamten Speicher abzusichern. Dies ermöglicht die Ausweitung des verwendeten Redundanzkonzepts vom Nur-Lesespeicher auch auf den Datenspeicher. Hierdurch lassen sich die Herstellungskosten unter Beibehaltung der vorhandenen Sicherheitsanforderungen weiter absenken.
Weitere bevorzugte Ausführungsformen ergeben sich aus den Unteransprüchen und der nachfolgenden Beschreibung von Ausführungsbeispielen an Hand von Figuren.
Es zeigen
- Fig. 1: ein erstes Beispiel für einen zweikernigen integrierten Mikrocontroller mit einem Datenspeicher und Prüfspeicher mit separater Adressierung, und
- Fig. 2: ein zweites Beispiel für einen besonders einfach aufgebauten zweikernigen integrierten Mikrocontroller einem Datenspeicher und einem Prüfspeicher.
Der Mikrocontroller in Fig. 1 umfasst zwei Zentralrecheneinheiten (CPU) 1, 2, die taktsynchron arbeiten. Beide Mikrocomputer arbeiten das gleiche Programm ab. Jede Einheit ist jeweils getrennt einem Adress- und Datenbus zugeordnet. An CPU 1 ist ein vollständiger Datenspeicher 7 angeschlossen. Das Mikroprozessorsystem umfasst weiterhin einen als Hardware-Element ausgeführten Vergleicher 3, mit dem die anstehenden Adressen und Daten der beiden Bussysteme ständig miteinander verglichen werden. Bei Nichtübereinstimmung wird ein Fehlersignal erzeugt. Zur vereinfachten Darstellung sind in den Figuren die bei Mikroprozessorsystemen üblicherweise vorhandenen Komponenten, wie Eingabe-/Ausgabeeinheiten, Nur-Lesespeicher, etc. nicht näher dargestellt. Diese nicht dargestellten Komponenten entsprechen im wesentlichen dem in der WO99/35543 beschriebenen kernredundanten Mikrocontroller.
Prüfdatenspeicher 5 am ersten Bus besitzt gegenüber Speicher 7 einen um den Faktor 8 reduzierten Speicherumfang. In Speicher 5 werden Prüfdaten gespeichert, welche praktisch gleichzeitig bei jedem Schreibvorgang von Daten durch CPU 1 in Speicher 7 durch Hardware-Generator 6 erzeugt werden. Durch die Erzeugung der Prüfdaten ohne programmtechnische Mittel kann der Schreibvorgang im Prinzip ohne erhöhten Taktzyklenverbrauch durchgeführt werden.

Beim Lesen wird Speicher 7 von CPU 1 über Adressdekoder 8 adressiert. Während des Lesevorgangs ist Hardware-Einheit 6 aktiv. In Hardware-Einheit 6 werden die Daten entsprechend dem Prüfdatenerzeugungsverfahren (z.B. Hamming-Code) überprüft und ggf. sofort korrigiert. Über die in Block 3 enthaltenen Bustreiber werden die anstehenden Daten gleichzeitig CPU 1 und CPU 2 zur Verfügung gestellt.

Falls Daten und Prüfdaten nicht zueinander passen, wird ein Fehler erkannt. Am zweiten Bus findet zwar auch eine Fehlererkennung 61 statt, jedoch bezieht sich diese auf ggf. im Bereich des ersten Bus korrigierte Daten. Diese Prüfung wird in Hardware-Vergleicher 61 vorgenommen, welcher ebenfalls ein Fehlersignal erzeugen kann. Der Prüfdatenspeicher 5 ist in räumlicher Nähe des Datenspeichers 7 angeordnet, damit eine Korrektur der Daten innerhalb kurzer Zeit erfolgen kann und damit noch im Rahmen des vorgegebenen Timings möglich ist.

Gemäß dem Beispiel in Fig. 1 ist der Block aus vollständigem Datenspeicher 7 und Prüfsummenspeicher 5 am ersten Bus durch einen zusätzlichen Adressdekoder 9' ergänzt, welcher die Adressen für Zugriffe auf Adressbereiche des Prüfdatenspeichers 5 dekodiert, die von CPU 2 kommen. Hierzu ist eine direkte Verbindung des diesem zugeordneten Adressbus mit Dekoder 9' vorgesehenen. Adressdekoder 8 dekodiert Speicherzugriffe durch CPU 1, die im Adressbereich des vollständigen Speichers 7 liegen. Die gelesenen Prüfdaten gelangen über Block 6 direkt zu Fehlererkennungsblock 61. Fehlererkennungsblock 61 enthält im Gegensatz zu Block 6 selbst keine Fehlerkorrektureinrichtungen. In Block 61 werden die Prüfdaten mit den über die Treiberstufen zum zweiten Bus geführten Daten verglichen. Dazu wird aus den (ggf. korrigierten) Lesedaten nochmals die Prüfsumme gebildet. Diese Prüfsumme wird mit den aus dem Speicher gelesenen Prüfdaten verglichen. Bei der Fehlererkennung am zweiten Bus wird Prüfdatenspeicher 5 von CPU 2 adressiert. Die Erkennung von Adressfehlern ist durch die unabhängige Adressierung des Prüfsummenspeichers mit Dekoder 9' sichergestellt.

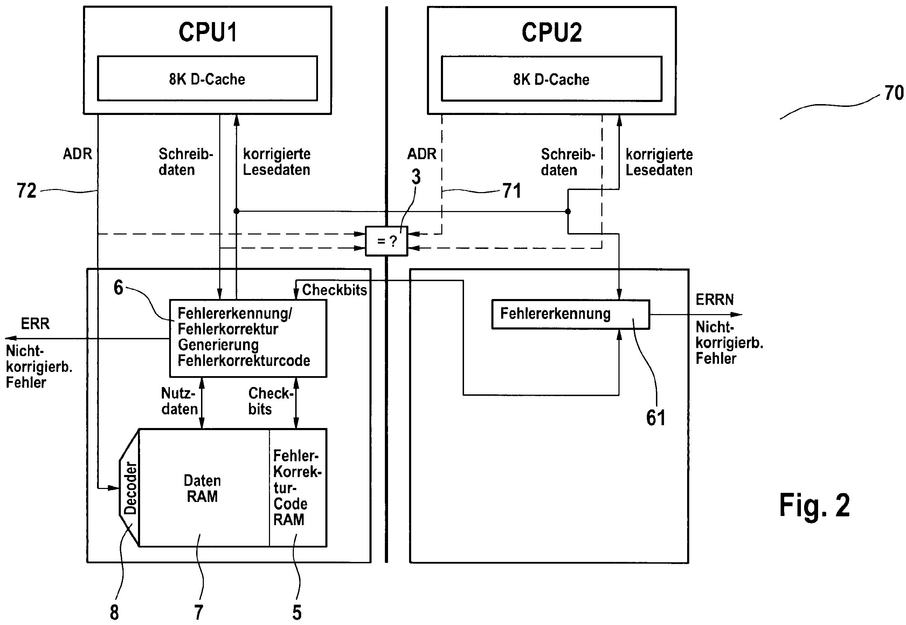

Auch im Mikroprozessorsystem in Fig. 2 sind entsprechend dem Beispiel in Fig. 2 vollständiger Datenspeicher 7 und Prüfsummenspeicher 5 in einem gemeinsamen Block zusammengefasst. Die Fehlererkennungs- und korrekturmethode in den Blöcken 6 und 61 entspricht ebenfalls dem Prinzip in Fig. 1. Das Mikroprozessorsystem in Fig. 2 unterscheidet sich vom Mikroprozessorsystem in Fig. 1 unter anderem dadurch, dass auf Adressdekoder 9' verzichtet wird. Die korrekte Adressgenerierung von CPU 1 wird überprüft indem sie mit der von CPU 2 (die den gleichen Code ausführt) verglichen wird. Innerhalb von Vergleicher 3 wird die Adresse von CPU 2 mit der aktuell von CPU 1 referenzierten Adresse verglichen und im Falle der Nichtübereinstimmung ein Fehlersignal erzeugt. Die Besonderheit des Mikroprozessorsystems gemäß dem Beispiel in Fig. 2 besteht vor allem darin, dass im Mikroprozessorbereich von CPU 2 weder ein Prüfdatenspeicher noch ein Datenspeicher vorhanden ist. Lediglich Block 61 zur Fehlererkennung während des Lesens und Schreibens ist entsprechend der Fehlererkennung 6 in Block 6 doppelt im Bereich von CPU 2 ausgeführt.

Wegen des im Gegensatz zum Beispiel in Fig. 1 fehlenden zweiten Adressdekoders kann bei dem Mikroprozessorsystem gemäß Fig. 2 keine Erkennung von Adressfehlern auf Grund von Redundanz durchgeführt werden. Um dennoch eine Adressfehlererkennung zu realisieren, wird bei der Prüfdatengenerierung in Block 6 die Adresse der zu schreibenden Speicheradresse mit einbezogen. Beim Schreiben werden dabei die Checkbits nicht nur an Hand der Datenbits einer Speicherstelle in Speicher 7 berechnet, sondern unter Einbeziehung der Adresse dieser Speicherstelle. Falls ein Fehler in der Adressierung vorliegt, kann dieser während eines Lesezugriffs festgestellt werden.

## Patentansprüche

1. Mikroprozessorsystem (60) zur Steuerung bzw. Regelung von zumindest zum Teil sicherheitskritischen Prozessen umfassend zwei in einem Chipgehäuse integrierte Zentralrecheneinheiten (1, 2), die zwei Zentralrecheneinheiten jeweils angeordnet an ein erstes und ein zweites Bussystem, zumindest einen vollständiger Speicher (7) am ersten Bussystem, Prüfdaten in einem oder mehreren Prüfdatenspeichern (5), die mit Daten des Speichers am ersten Bussystem zusammenhängen, wobei der Prüfdatenspeicher (5) kleiner als der vollständige Speicher ist, und dass die Bussysteme Vergleichs- und/oder Treiberkomponenten (3) umfassen, welche den Datenaustausch und/oder Vergleich von Daten zwischen den beiden Bussystemen ermöglichen, wobei der oder die Prüfdatenspeicher (5) am ersten Bussystem angeordnet ist/sind, und am zweiten Bussystem weder ein Prüfdatenspeicher, noch ein Speicher angeordnet ist, welcher zur Absicherung von Daten des vollständigen Speichers (7) eingesetzt wird, wobei das Mikroprozessorsystem ausgestaltet ist, bei einem Lesezyklus die Daten des vollständigen Speichers (7) mit diesen Daten zugeordneten Prüfdaten durch eine Hardware-Prüfeinheit (6) zu vergleichen und **dadurch gekennzeichnet, dass** das Mikroprozessorsystem ausgestaltet ist mittels einer Hardware-Korrektureinheit (6) die Daten im Falle eines Fehlers mit Hilfe der Prüfdaten zu korrigieren, und dass im Bereich des zweiten Bussystems eine Hardware-Fehlererkennungseinheit (61) angeordnet ist, welche ausgestaltet ist die Prüfdaten aus dem Prüfdatenspeicher (5) und die gegebenenfalls korrigierten Daten aus dem vollständigen Speicher (7) zu vergleichen.

2. Mikroprozessorsystem nach Anspruch 1, wobei zumindest ein Teil des vollständigen Speichers (7) am ersten Bus mittels des Prüfdatenspeichers (5) und Prüfdaten am ersten Bus abgesichert ist und am ersten Bussystem ein Hardware-Prüfdatengenerator (6) angeordnet ist, welcher die Prüfdaten für den Prüfdatenspeicher (5) erzeugt.

3. Mikroprozessorsystem nach Anspruch 1 oder 2, wobei der vollständige Speicher und der Prüfdatenspeicher am ersten Bus jeweils einen eigenen Adressdekoder (8,9') aufweisen, wobei insbesondere zumindest einer dieser Adressdekoder mit dem zweiten Bussystem verbunden ist.

4. Mikroprozessorsystem nach Anspruch 2 oder 3, wobei die Prüfdaten am ersten Bus im physikalischen Speicherblock des vollständigen Speichers oder zumindest in unmittelbarer Nähe des vollständige Speichers gespeichert werden.

5. Mikroprozessorsystem nach mindestens einem der Ansprüche 1 bis 4, wobei eine oder mehrere Vergleichsstruktur/-en in Hardware (3) implementiert ist/sind, welche während eines jeden Schreib- und/oder Lesevorgangs die anstehenden Adressen der Adressbusse und/oder die an den Datenbussen anstehenden Daten miteinander vergleicht/vergleichen, und bei abweichenden Adressen und/oder Daten ein Fehlersignal erzeugt/erzeugen.

6. Mikroprozessorsystem nach mindestens einem der Ansprüche 1 bis 5, wobei bei einem Lesezyklus die Daten des vollständigen Speichers vor dem Vergleich in Vergleichsstruktur (3) zunächst auf Fehler mittels dem vollständigen Speicher direkt an diesem Bus zugeordneten Prüfdatenspeicherbereich (5) geprüft werden und im Falle eines Fehlers die Daten korrigiert oder ein Fehlersignal produziert werden/wird.

7. Mikroprozessorsystem nach mindestens einem der Ansprüche 1 bis 6, wobei die Hardware-Prüfeinheit (6) im oder in der Nähe des Daten-Speicherbereichs positioniert sind.

8. Mikroprozessorsystem nach mindestens einem der Ansprüche 1 bis 7, wobei die in die Mikrorecheneinheit am zweiten Bussystem eingelesenen Daten aus dem vollständigen Speicher am ersten Bus stammen.

9. Mikroprozessorsystem (70) gemäß mindestens einem der Ansprüche 1, 2 und 4 bis 8, wobei die Speichergruppe aus vollständigem Speicher (7) und dem in lokaler Nähe oder im gleichen Speicher angeordnete Prüfdatenspeicher (5) lediglich einen Adressdekoder (8) umfasst.

10. Verwendung der Mikroprozessorsysteme gemäß den obigen Ansprüchen in Kraftfahrzeugsteuergeräten, insbesondere in Kraftfahrzeugbremsensteuergeräten, Steuergeräten für Fahrwerksregelung, Steuergeräten für Sicherheitssysteme oder für entsprechende Kombinationssteuergeräte.

## Claims

1. Microprocessor system (60) for controlling or regulating at least partly safety-critical processes, comprising two central processing units (1, 2) integrated in a chip housing, the two central processing units in each case arranged on a first and a second bus system, at least one complete memory (7) on the first bus system, test data in one or more test data stores (5) which are connected to data in the memory on the first bus system, where the test data store (5) is smaller than the complete memory and the bus systems comprise comparison and/or driver components (3) which allow the data interchange and/or comparison of data between the two bus systems, where the test data store(s) (5) is/are arranged on the first bus system, and the second bus system has neither a test data store nor a memory arranged on it which is used to back up data in the complete memory (7), where the microprocessor system is configured so as, in a read cycle, to compare the data in the complete memory (7) with test data associated with these data by means of a hardware test unit (6) and **characterized in that** the microprocessor system is configured so as, by means of a hardware correction unit (6), to correct the data using the test data in the event of an error, and **in that** the area of the second bus system contains a hardware error recognition unit (61) which is configured to compare the test data from the test data store (5) and the possibly corrected data from the complete memory (7).

2. Microprocessor system according to Claim 1, where at least part of the complete memory (7) on the first bus is backed up using the test data store (5) and test data on the first bus, and the first bus system has a hardware test data generator (6) arranged on it which generates the test data for the test data store (5).

3. Microprocessor system according to Claim 1 or 2, where the complete memory and the test data store on the first bus each have a dedicated address decoder (8, 9'), with particularly at least one of these address decoders being connected to the second bus system.

4. Microprocessor system according to Claim 2 or 3, where the test data on the first bus are stored in the physical memory block of the complete memory or at least in direct proximity to the complete memory.

5. Microprocessor system according to at least one of Claims 1 to 4, where one or more comparison structure(s) is/are implemented in hardware (3) and, during each read and/or write operation, compare(s) the queuing addresses on the address buses and/or the data queuing on the data buses with one another and generate(s) an error signal if the addresses and/or data differ.

6. Microprocessor system according to at least one of Claims 1 to 5, where a read cycle involves the data in the complete memory being first of all, prior to the comparison in the comparison structure (3), tested for errors using the test data memory area (5) associated with the complete memory directly on this bus and the data being corrected or an error signal being produced in the event of an error.

7. Microprocessor system according to at least one of Claims 1 to 6, where the hardware test unit (6) is positioned in, or in proximity to, the data memory area.

8. Microprocessor system according to at least one of Claims 1 to 7, where the data read into the microprocessing unit on the second bus system come from the complete memory on the first bus.

9. Microprocessor system (70) according to at least one of Claims 1, 2 and 4 to 8, where the memory group comprising the complete memory (7) and the test data store (5) arranged in local proximity to or in the same memory comprises just one address decoder (8).

10. Use of the microprocessor systems according to the above claims in motor vehicle controllers, particularly in motor vehicle brake controllers, controllers for chassis regulation, controllers for safety systems or for appropriate combination controllers.

## Revendications

1. Système à microprocesseur (60) destiné à commander ou réguler des processus au moins partiellement critiques pour la sécurité, comprenant deux unités centrales de traitement (1, 2) intégrées à un boîtier de puce, les deux unités centrales de traitement étant respectivement disposées sur un premier et un second système de bus, au moins une mémoire intégrale (7) sur le premier système de bus, des données de vérification, qui sont en relation avec des données de la mémoire sur le premier système de bus, étant enregistrées dans une ou plusieurs mémoires de données de vérification (5), dans lequel la mémoire de données de vérification (5) est plus petite que la mémoire intégrale, et dans lequel les systèmes de bus comprennent des composants de comparaison et/ou de commande (3) qui permettent l'échange de données et/ou la comparaison de données entre les deux systèmes de bus, dans lequel la ou les mémoires de données de test (5) est/sont disposée(s) sur le premier système de bus, et le second système de bus ne comporte ni mémoire de données de vérification ni mémoire utilisée pour sécuriser les données de la mémoire intégrale (7), dans lequel le système de microprocesseur est conçu pour comparer les données de la mémoire intégrale (7) à des données de vérification associées auxdites données au moyen d'une unité de vérification du matériel (6) pendant un cycle de lecture, et **caractérisé en ce que** le système de microprocesseur est conçu pour corriger les données à l'aide des données de vérification en cas d'erreur au moyen d'une unité de correction matérielle (6), et **en ce qu'**une unité de détection d'erreur matérielle (61), qui est conçue pour comparer les données de vérification provenant de la mémoire de données de vérification (5) et les données éventuellement corrigées provenant de la mémoire intégrale (7), est disposée dans la zone du second bus.

2. Système de microprocesseur selon la revendication 1, dans lequel au moins une partie de la mémoire intégrale (7) est sécurisée sur le premier bus au moyen de la mémoire de données de vérification (5) et de données de vérification, et un générateur de données de vérification du matériel (6), qui génère les données de vérification destinées à la mémoire de données de vérification (5), est disposé sur le premier système de bus.

3. Système de microprocesseur selon la revendication 1 ou 2, dans lequel la mémoire intégrale et la mémoire de données de vérification sur le premier bus comportent respectivement leur propre décodeur d'adresses (8, 9') sur le premier bus, dans lequel au moins l'un desdits décodeurs d'adresses est en particulier relié au second système de bus.

4. Système de microprocesseur selon la revendication 2 ou 3, dans lequel les données de vérification sont stockées sur le premier bus dans le bloc de mémoire physique de la mémoire intégrale ou au moins à proximité immédiate de la mémoire intégrale.

5. Système de microprocesseur selon au moins l'une des revendications 1 à 4, dans lequel une ou plusieurs structures de comparaison qui, pendant chaque opération d'écriture et/ou de lecture, comparent entre elles les adresses des bus d'adresses et/ou les données présentes sur les bus de données, sont mises en oeuvre sous forme matérielle (3), et génèrent un signal d'erreur en cas d'écart entre les adresses et/ou les données.

6. Système de microprocesseur selon au moins l'une des revendications 1 à 5, dans lequel, lors d'un cycle de lecture, les données de la mémoire intégrale sont d'abord directement vérifiées au moyen de la mémoire intégrale au niveau de la plage de mémoire de données de vérification (5) associée audit bus pour déterminer la présence d'erreurs avant la comparaison effectuée dans la structure de comparaison (3) et, en cas d'erreur, les données sont corrigées ou un signal d'erreur est produit.

7. Système de microprocesseur selon au moins l'une des revendications 1 à 6, dans lequel l'unité de vérification du matériel (6) est positionnée dans ou à proximité de la zone de stockage de données.

8. Système de microprocesseur selon au moins l'une des revendications 1 à 7, dans lequel les données lues dans l'unité à microprocesseur sur le second système de bus proviennent de la mémoire intégrale sur le premier bus.

9. Système de microprocesseur (70) selon au moins l'une des revendications 1, 2 et 4 à 8, dans lequel le groupe de mémoire constitué d'une mémoire intégrale (7) et de la mémoire de données de vérification (5) située localement ou dans la même mémoire, comprend uniquement un décodeur d'adresses (8).

10. Utilisation des systèmes de microprocesseurs selon les revendications précédentes dans des appareils de commande de véhicules automobiles, en particulier dans des appareils de commande de freinage de véhicules automobiles, des appareils de commande pour la régulation de châssis, des appareils de commande pour systèmes de sécurité ou pour des appareils de commande combinés correspondants.
